# EUROPEAN PATENT APPLICATION

(11) **EP 2 391 151 A1**
(43) Date of publication of application: **30.11.2011**
(21) Application number: 10005452.7
(22) Date of filing: 26.05.2010
(51) Int. Cl.: H04W 12/12, H04L 29/06, G06F 21/00

(54) **Mobile device security alert method and system**

(71) Applicant: Deutsche Telekom AG, 53113 Bonn (DE)
(72) Inventor: Pickford, Martin, Abbots Langley, Hertfordshire WD5 0ED (GB); Christian, Philip, Ruislip, Middlesex HA4 0AU (GB)
(74) Representative: Cohausz Hannig Borkowski Wißgott

(57) **Abstract**

The invention relates to a method and a system for indicating a security compromise of a mobile terminal device (1), the mobile terminal device (1) being connected to a mobile radio communication network (2) and accessing an internet protocol based communication network (3) via the mobile radio communication network (2), wherein a network device (4) runs an intrusion detection system (IDS) to detect malicious activities, whereby the network device (4) is associated with the mobile radio communication network (2), and analyzes the data traffic to the internet protocol based communication network (3) arising from the mobile device (1), an alert message indicating a security compromise being generated and rendered on the mobile terminal device (1) if a malicious activity, in particular, a computer virus, a computer worm or a Trojan, is detected by the network device (4).

## Description

The invention relates to a method and a system for indicating a security compromise of a mobile terminal device, the mobile terminal device being connected to a mobile radio communication network and accessing an internet protocol based communication network via the mobile radio communication network, wherein a network device runs an intrusion detection system (IDS) to detect malicious activities.

Computers are often compromised by malicious software, so called malware, such as a virus, a worm or a Trojan. Being connected to a network, such as the internet, a compromised computer typically creates high network traffic that strains the network. Computer worms, in particular, use a computer network to send copies of itself to other computers on the network and it may do so without any user intervention. This is due to security shortcomings on the target computer. Unlike a virus, it does not need to attach itself to an existing program. Worms almost always cause at least some harm to the network, if only by consuming bandwidth, whereas viruses almost always corrupt or modify files on a targeted computer. Many worms that have been created are only designed to spread, and don't attempt to alter the systems they pass through. However, the network traffic and other unintended effects can often cause major disruption. Therefore, there is high interest of network operators and customers to detect malware and to protect against it as good as possible.

To achieve this aim, client side software like Anti-virus and anti-spyware software are helpful, but must be kept up-to-date with new pattern files at least every few days. However not every customer uses such protecting software. On the other hand, network resident solutions are known. The prior art shows the use of Intrusion Detection Systems (IDS) running on network devices in a cable based communication network, such as Ethernet networks, in particular, the internet. An intrusion detection system (IDS) is a device (or application) that monitors network and/or system activities for malicious activities or policy violations and produces reports to a Management Station. Events occurring in a computer system or network are monitored and analyzed for signs of possible incidents, which are violations or imminent threats of violation of computer security policies, acceptable use policies, or standard security practices. An IDS running on a network device can analyze and be utilized to identify that the computer is compromised.

However, the information that a computer is compromised is only accessible to users on the IDS, and to other users to which administrators wish alerts to be sent. This information will not be presented to the person who is actually using that computer. Furthermore, intrusion detection systems are not used to analyze traffic in mobile radio communication networks arising from mobile customer's terminal devices , as the majority of mobile devices like cell phones, smart phones and the like are less susceptible or even do not enable the possibility to access the internet or to write emails.

Therefore, the object of the invention is to provide a method that alert a mobile customer that his mobile terminal device has a security compromise.

This problem is solved according to the invention by a method indicated in claim 1 and a system indicated in claim 10. Advantageous embodiments of the invention are provided in the dependent claims.

What is especially advantageous about the method of indicating a security compromise of a mobile terminal device, the mobile terminal device being connected to a mobile radio communication network and accessing an internet protocol (IP) based communication network via the mobile radio communication network, wherein a network device runs an intrusion detection system (IDS) to detect malicious activities, is the fact that the network device is associated with the mobile radio communication network, and analyses the data traffic to the internet protocol based communication network (3) arising from the mobile device, and that an alert message indicating a security compromise is generated and rendered on the mobile terminal device if a malicious activity, in particular, a computer virus, a computer worm or a Trojan, is detected by the network device.

The fundamental idea of the invention is based on providing an network-based intrusion detection system, IDS, for a mobile radio communication network and to associate the IDS with this network in that the IDS becomes part of the mobile radio communication network. Thus it is possible to analyze the traffic arising from the mobile terminal device before it enters the IP based network, i.e. the internet. Furthermore the fundamental idea of the invention is to notify the customer using the mobile terminal device directly if malicious activity, in particular, a computer virus, a computer worm or a Trojan, is detected within the traffic of his device. Several embodiments of the invention can be used to achieve that, as described hereinafter.

Advantageously, data traffic generated by the mobile terminal device and sent to the internet protocol based communication network may be directed over the network device. This enables the network device to analyze and evaluate all traffic from the terminal device. From the terminal device's point of view the network device is located in advance of the internet protocol based network, i.e. between itself and the mobile radio communication network or between the mobile radio communication network and the IP-based network, so da that all traffic coming from the terminal device passes the network device. In an alternative embodiment the network device may only be listening to the traffic of the mobile device. This means that the traffic of the mobile device is diverted to the network device additionally to the regular data flow to the IP-based network that passes the network device without entering it.

In a first embodiment the alert message may advantageously be generated by the network device and sent to the mobile terminal device via the mobile communication network. The first embodiment can preferably be used if the mobile terminal client is a mobile phone, such as a cell phone, a smart phone or a PDA (Personal Digital Assistant) enabled to communicate via a mobile radio communication network. The alert message can then be an electronic short message of a mobile messaging service of the mobile network, in particular, a SMS, MMS or email, that is rendered on the terminal device instantly.

Preferably, the IP address of the mobile terminal device is determined and assigned to a mobile phone number associated with the mobile terminal device, in particular, the MSISDN, if the alert message is generated. The alert message can then be sent to said mobile phone number. The IP address of the mobile terminal device is the source IP address that is in all IP packets that come from the mobile terminal device. Therefore, the IP address can be determined by inspection of the IP packets that come from the mobile terminal device. The mobile network typically contains an LDAP server (Lightweight Directory Access Protocol). An LDAP request can be sent to the server containing the IP address of the mobile terminal device whereupon the LDAP will respond with a response that contains the MSISDN of the mobile terminal device. When the mobile terminal device requests the mobile network to provide an internet connection the mobile network can allocate an IP address to the device and store the IP to MSISDN mapping in a directory in such a way that the mapping can be queried using LDAP requests.

In a second embodiment the internet protocol based communication network may be accessed by the mobile terminal device by means of a client software installed in the mobile terminal device, whereby the network device can send the alert message to the client software that renders the massage instantly on the mobile terminal device. In an alternative the network device may cause the client software to generate and to render the alert message on the mobile terminal device instantly if a malicious activity, in particular, a computer virus, a computer worm or a Trojan is detected by the IDS. In this embodiment the client software is accessed by the IDS directly.

In another embodiment of the invention a combined approach is followed whereby the network device attempts to contact the client software, and, if this attempt fails then the network device sends an electronic short message, in particular, a SMS, to the mobile phone number, in particular, to the MSISDN.

In another embodiment of the invention the network device causes the customer's web requests to be temporarily diverted to an alternative web server which will respond with a web page that constitutes an alert message.

Preferably, the mobile terminal device may be a mobile phone or a mobile computer with a mobile broadband card or stick to get access to the mobile radio communication network. Furthermore, the mobile radio communication network may be a public land mobile network (PLMN) providing the mobile device access to mobile services.

The system for indicating a security compromise of a mobile terminal device comprises a mobile terminal device being connectable to a mobile radio communication network and being able to access an internet protocol based communication network via the mobile radio communication network, and a network device that comprises an intrusion detection system (IDS) to detect malicious activities, whereby the network device is associated with the mobile radio communication network and is arranged to analyze the data traffic to the internet protocol based communication network arising from the mobile device, whereby an alert message indicating a security compromise can be generated and rendered on the mobile terminal device if a malicious activity, in particular, a computer virus, a computer worm or a Trojan, is detected by the network device.

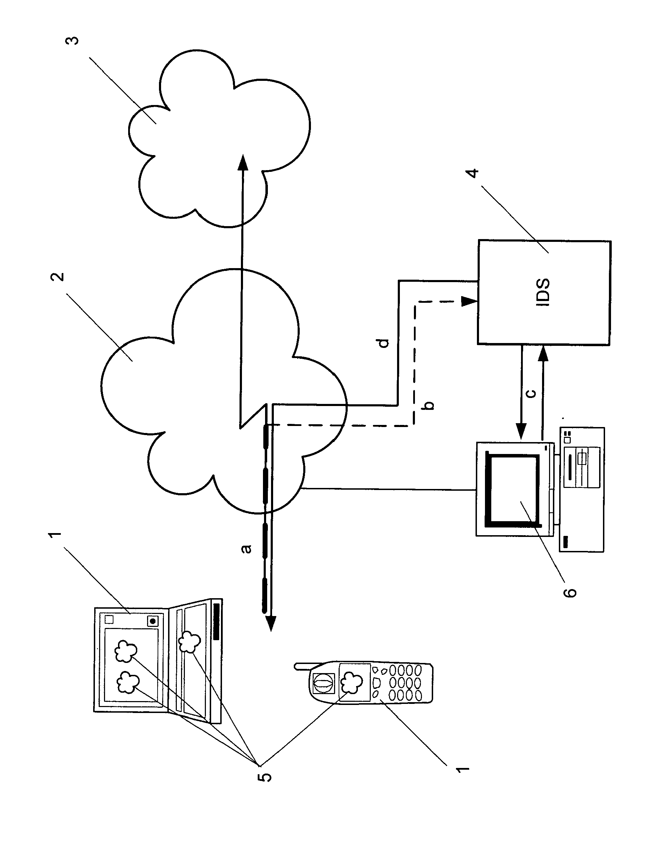

The sole figure schematic illustrates one embodiment of the invention that is described below. While the invention is susceptible of various modifications and alternative constructions, an illustrated embodiment thereof have been shown in the figure and will be described below in detail. It should be understood, however, that there is no intention to limit the invention to the specific forms disclosed, but on the contrary, the intention is to cover all modifications, alternative constructions, and equivalents falling within the spirit and scope of the invention.

In the figure a mobile terminal device 1 is indicated as notebook or mobile phone. The mobile device 1 has a security compromise that is illustrated by reference numeral 5 indicating malware like a virus, a computer worm or a Trojan. The mobile terminal device 1 is connected to a mobile radio communication network 2 and accesses an internet protocol (IP) based communication network 3 via the mobile radio communication network 2. The IP-based network is, for example, the internet. The data link between the mobile device 1 and the internet 3 is indicated by an arrow.

A network device 4 is associated with the mobile radio communication network 2. It runs an intrusion detection system (IDS) to detect malicious activities within the traffic of the mobile device, in particular, a computer virus, a computer worm or a Trojan. The network device 4 is part of or resides in the mobile radio communication system and connected to it by means of a physical data link. Traffic arising from the mobile device 1 is directed to the network device 4, indicated by broken line, so that the IDS can analyze the data traffic from the mobile device.

An alert message indicating a security compromise of mobile device 1 is generated by the IDS if a malicious activity, in particular, a computer virus, a computer worm or a Trojan, is detected within the traffic. This message is then sent to the mobile device 1 that renders it immediately to the customer. In an alternative the IDS causes the mobile client to generate an alert message and to render it immediately on the mobile device 1 to the customer if a malicious activity, in particular, a computer virus, a computer worm or a Trojan, is detected within the traffic.

An intrusion detection system that can be used according to the invention is known under the name Snort®. Snort® is a free and open source network intrusion detection and prevention system originally released in 1998 by the company Sourcefire Inc., downloadable via internet under address http://www.snort.org. This IDS is capable of performing real-time traffic analysis and packet logging on IP (Internet Protocol) networks. Snort® can perform protocol analysis and content searching and/ or matching. It can be used to detect a variety of attacks and probes, such as buffer overflows, stealth port scans, CGI (Common Gateway Interface) attacks, SMB (Server Message Block) probes, OS (Operating System) fingerprinting attempts, and much more. It uses a flexible rules language to describe traffic that it should collect or pass, as well as a detection engine that utilizes a modular plug-in architecture. Although Snort® is a possible choice to implement an IDS according to the invention, it should be understood, however, that there is no intention to limit the invention to this specific IDS disclosed. Other intrusion detection systems could be used as well according to the individual needs.

A web frontend named ACID (Analysis Console for Intrusion Databases) to Snort® is available under internet address http://www.andrew.cmu.edu/user/rdanyliw/snort/snortacid.html. The Analysis Console for Intrusion Databases (ACID) is a PHP-based analysis engine to search and process a database of security events generated by various Intrusion Detection Systems. The features include inter alia Query-builder and search interface for finding alerts matching on alert meta information (e.g. signature, detection time) as well as the underlying network evidence (e.g. source/destination address, ports, payload, or flags), and Alert management by providing constructs to logically group alerts to create incidents (alert groups), deleting the handled alerts or false positives, exporting to email for collaboration, or archiving of alerts to transfer them between alert databases. ACID has the ability to analyze a wide variety of events which are post-processed into its database. ACID can be used to implement a front end to the Intrusion Detection system of network device 4. Although ACID is a possible choice for this, it should be understood, however, that there is no intention to limit the invention to this specific front end disclosed. Other front ends could be used as well according to the individual needs.

In a first embodiment the mobile terminal device 1 is a mobile handset, i.e. phone, being able to communicate via the mobile radio communication network 2. A key feature of this embodiment of the method according to the invention is that the network device 4 sends an SMS to the mobile handset 1 that it detects as having a security problem. In order to send a SMS to the mobile device 1 the network device 4 must be aware of the phone number to which the SMS has to be sent. The network device 4 which contains IDS functionality, therefore, perform a lookup on other network devices 6 such as an LDAP (The Lightweight Directory Access Protocol) lookup to ascertain the phone number, in particular, the MSISDN (Mobile Subscriber ISDN Number). LDAP is an application protocol for querying and modifying data using directory services running over TCP/IP. A directory is a set of objects with attributes organized in a logical and hierarchical manner. A simple example is the telephone directory, which consists of a list of names of either persons or organizations organized alphabetically, with each name having an address and phone number associated with it.

The other network device 6 may contain such a directory, in particular, it may be a home location register (HLR) in which the phone number as well as the IP address of the customer is stored. Based on the IP-address of the mobile terminal device 1, retrieved by the network device 4, the network device 4 is able to get the phone number of the mobile terminal device 1 which has a security problem, to send an SMS to it and to inform the user that he has a security problem. This feature will provide an alert to those who are using a normal handset as a modem to connect a computer to the Internet, and will provide an alert to those who are using a smart handset to connect to the Internet which may be vulnerable to a security attack on a smart handset.

In a second embodiment a key feature of the method according to the invention is that the mobile terminal device 1 has a client software to get access to the internet via the mobile radio communication network 2. In this embodiment the mobile device may be a mobile computer with a USB stick modem or a broadband data card to connect the mobile computer 1 with the mobile radio communication network 2 and respectively with the internet 3. In an alternative the mobile device 1 may be a smart phone or a PDA with such a client software. The client software is normally written by the network operator of the mobile radio communication network 2. For example, the applicant's so called T-Mobile Communication Center (TMCC) can be used as client software.

The network device 4 communicates with the client software on the mobile terminal device 1 directly, and displays a warning to the user of the mobile device 1 that his mobile device 1 has a security problem which has been detected by the network device 4 and by the IDS respectively. In a conventional computer network this is not possible because there is no client software which the network operator can rely on the user to have installed on his mobile device 1. In a mobile radio communication network 2 it is necessary to connect the mobile device 1 with the mobile radio network 2 using a client software. The client software is written by or by order of the network operator which gives the operator the ability to include this feature by default. This enables the network device 4 to contact the client software and to cause it to display a warning to the user of the mobile device, if malicious activities are detected.

In a third embodiment of the method according to the invention a combined approach is followed whereby the network device 4 attempts to contact the client software that might be installed on a computer, and, if this attempt fails then the network device 4 then sends an SMS to the MSISDN of the mobile device as a fallback approach.

The following steps are indicated in the figure:
a. customer connects to internet using a USB Stick Modem 1 or via mobile handset 1;
b. network device 4 with IDS detects virus/ worm/ Trojan activity in customers traffic;
c. customers IP address is matched to customers MSISDN;
d. network device 4 sends a message to client software on customers PC 1 alerting that a virus/ worm/ Trojan has been detected; alternatively, in case of a mobile phone 1, network device 4 sends a SMS to the mobile device 1 alerting that a virus/ worm/ Trojan has been detected;

In a fourth embodiment of the method according to the invention a traffic redirection approach is followed whereby the network device 4 instructs another element within the mobile network such as a transparent services gateway to redirect the customer's web requests to a different web server to the one that customer was attempting to communicate with. Instead of seeing the web page that the customer expects a web page is sent to them explaining that a security problem has been found with their client. Typically a button or link might be included in the web page which when it is selected by the customer causes the redirection to stop so that Internet web pages might be accessed as normal. Alternatively the web redirection, IDS and /or web server may be collapse into on device which handles all web requests, detects security problems and sends warning web pages to customers that have security problems.

## Claims

1. A method of indicating a security compromise of a mobile terminal device (1), the mobile terminal device (1) being connected to a mobile radio communication network (2) and accessing an internet protocol based communication network (3) via the mobile radio communication network (2), wherein a network device (4) runs an intrusion detection system (IDS) to detect malicious activities, **characterized in that** the network device (4) is associated with the mobile radio communication network (2), and analyzes the data traffic to the internet protocol based communication network (3) arising from the mobile device (1), and that an alert message indicating a security compromise is generated and rendered on the mobile terminal device (1) if a malicious activity, in particular, a computer virus, a computer worm or a Trojan, is detected by the network device (4).

2. The method according to claim 1, **characterized in that** the data traffic generated by the mobile terminal device (1) and sent to the internet protocol based communication network (3) is directed over the network device (4).

3. The method according to claim 1 or 2, **characterized in that** the alert message is generated by the network device (4) and sent to the mobile terminal device (1) via the mobile communication network (2).

4. The method according to one of the preceding claims, **characterized in that** the alert message is an electronic short message of a mobile messaging service, in particular, a SMS, MMS or email.

5. The method according to one of the preceding claims, **characterized in that** the IP address of the mobile terminal device (1) is determined and matched to a mobile phone number, in particular, the MSISDN, associated with the mobile terminal device (1) if the alert message is generated, and that the alert message is sent to said mobile phone number.

6. The method according to one of the preceding claims, **characterized in that** the internet protocol based communication network (3) is accessed by the mobile terminal device (1) by means of a client software installed on the mobile terminal device (1), and that the network device (4) sends the alert message to the client software rendering the massage on the mobile terminal device (1).

7. The method according to one of the preceding claims, **characterized in that** the internet protocol based communication network (3) is accessed by the mobile terminal device (1) by means of a client software installed on the mobile terminal device (1), and that the network device (4) causes the client software to generate and to render the alert message on the mobile terminal device (1) if a malicious activity, in particular, a computer virus, a computer worm or a Trojan is detected.

8. The method according to one of the preceding claims, **characterized in that** the internet protocol based communication network (3) is accessed by the mobile terminal device (1) by means of a mobile radio communication network (3), and that the mobile radio communication network (3) redirects client web requests to a web server that displays the alert web page on the client web browser on the mobile terminal device (1).

9. The method according to claim 6 or 7, **characterized in that** the network device (4) attempts to contact the client software, and, if this attempt fails then the network device (4) sends an electronic short message, in particular, a SMS, to the mobile phone number, in particular, to the MSISDN.

10. The method according to one of the preceding claims, **characterized in that** the mobile terminal device (1) is a mobile phone or a mobile computer with a mobile broadband card or stick to get access to the mobile radio communication network (2), and that the mobile radio communication network (2) is a public land mobile network (PLMN).

11. A system for indicating a security compromise of a mobile terminal device (1), the mobile terminal device (1) being connectable to a mobile radio communication network (2) and being able to access an internet protocol based communication network (3) via the mobile radio communication network (2), wherein a network device (4) comprises an intrusion detection system (IDS) to detect malicious activities, **characterized in that** the network device (4) is associated with the mobile radio communication network (2) and is arranged to analyze the data traffic to the internet protocol based communication network (3) arising from the mobile device (1), whereby an alert message indicating a security compromise can be generated and rendered on the mobile terminal device (1) if a malicious activity, in particular, a computer virus, a computer worm or a Trojan, is detected by the network device (4).
